# EUROPEAN PATENT SPECIFICATION

(11) **EP 0 942 031 B1**
(45) Date of publication and mention of the grant of the patent: **23.06.2010**
(21) Application number: 99104611.1
(22) Date of filing: 09.03.1999
(51) Int. Cl.: C08J 5/18, C08L 67/02, C08K 3/22, B32B 27/36

(54) **White polyester film**
Weisser Polyesterfilm
Film polyester blanc

(30) Priority: 10.03.1998 JP 5788698; 13.03.1998 JP 6273198
(43) Date of publication of application: 15.09.1999
(73) Proprietor: Mitsubishi Polyester Film Corporation, Minato-ku, Tokyo (JP)
(72) Inventor: Miki, Takatoshi, c/o Mitsubishi Polyester Film Co., Sakata-gun, Shiga-ken (JP)
(74) Representative: Schweitzer, Klaus

(56) References cited:
- EP-A- 0 605 130
- DATABASE WPI Section Ch, Week 9724 Derwent Publications Ltd., London, GB; Class A23, AN 97-262200 XP002103955 & JP 09 057925 A (TORAY IND INC) , 4 March 1997
- DATABASE WPI Section Ch, Week 9031 Derwent Publications Ltd., London, GB; Class A23, AN 90-234616 XP002103956 & JP 02 161613 A (TORAY IND INC) , 21 June 1990

## Description

### BACKGROUND OF THE INVENTION

The present invention relates to a white polyester film, and more particularly, it relates to a white polyester film which can retain a high design value, can be considerably reduced in concentration of lead as harmful element, and is free from environmental pollution upon disposal treatment thereof.

Biaxially stretched films typically comprising polyethylene terephthalate have been used as substrates or base materials in various application fields such as information recording media, capacitors, wrapping or packaging materials, printing plates, electrical insulating materials or photographic films, since these films are excellent in mechanical properties, electrical properties, chemical resistance, dimensional stability or the like.

Recently, because of such excellent properties, these polyester films have also been extensively applied to electronic white boards or magnetic cards, e.g., credit cards, telephone cards, JR cards or pinball-game prepaid cards in the fields of finance, telecommunication, recreation or leisure, transportation or the like. The polyester films have been expected to further expand application fields thereof.

In particular, with the recent development of printing techniques, some prepaid cards having picture patterns printed thereon, etc., have been traded as value-added products at a premium due to high design value of the picture patterns.

In this case, in order to obtain clear contrast on the printed picture patterns or delicate contrast of shade or shadow thereon, it is especially important that the polyester film as a base material has a good whiteness. When the polyester film is used as a base material of the prepaid card, a magnetic layer is formed on a surface of the polyester film opposite to the printed surface thereof. The magnetic layer has usually a blackish brown color due to a magnetic material, a binder resin, etc., as constituents thereof. Therefore, in order to prevent a whiteness of the printed surface from being adversely affected by the color of the magnetic layer formed on the opposite surface, it is extremely important that the polyester film has a good hiding power. In general, such a hiding property has been imparted to the polyester film by blending a white pigment therein.

Meanwhile, the process for the production of these magnetic cards includes such a final step of cutting or stamping a sheet-like film having picture patterns and the magnetic layer on opposite surfaces thereof, into a predetermined card size. At this time, peripheral film portions which remain after cards are cut or stamped out from the sheet-like film, are no longer utilizable and, therefore, required to be disposed of as in-process wastes.

In recent years, with the increasing need for taking a global measure for environmental protection, it has been required to meet legal environmental criteria not only in industrial processes but also in domestic life of the consuming public upon waste disposal. For this reason, a careful attention must be paid so as not to discharge harmful substances.

The above-mentioned white pigment blended in polyester, e.g., titanium dioxide pigment, contains a small amount of lead. Therefore, upon disposal of the polyester film, there arises a problem concerning how the lead contained therein should be treated.

It is known that lead forms various compounds when discharged in environments such as atmospheric air, river, sea or soil. and that these compounds induce various symptoms of poisoning when taken in human bodies.

For example, in the case where waste cards such as used magnetic cards are buried under the ground, there is caused a problem concerning the concentration of lead components contained in the waste cards.

Various pigments have been incorporated in white films to impart an appropriate hiding power thereto. However, from the standpoint of environmental protection upon disposal of these white films, it has been strongly demanded to further reduce a lead content of the white films.

As a result of the present inventor's earnest studies to solve the above problems, it has been found that these problems can be overcome by using a polyester film containing a specific white pigment in a specific amount and having a specific optical density and a specific lead concentration.

The present invention has been attained on the basis of the above finding.

### SUMMARY OF THE INVENTION

It is an object of the present invention to provide a white polyester film which can be considerably reduced in concentration of lead compounds and is free from environmental pollution upon disposal.

To attain the above aim, in the first aspect of the present invention, there is provided a white polyester film which contains a white pigment, has an optical density of 0.1 to 3.0 and contains lead in an amount of not more than 50 ppm preferably not move than 10 ppm.

In the second aspect of the present invention, there is provided a white polyester film having a multi-layered structure and comprising at least one outer layer containing a white pigment in an amount of 2 to 40 % by weight based on the weight of said outer layer, and at least one other layer containing a white pigment which contains lead in an amount of not more than 50 ppm.

### DETAILED DESCRIPTION OF THE INVENTION

The present invention is described in detail below.

The "polyester" used in the present invention means polymers containing ester groups which are produced by the polycondensation of dicarboxylic acid and diol, or hydroxycarboxylic acid. As the dicarboxylic acids, there may be exemplified terephthalic acid, isophthalic acid, adipic acid, azelaic acid, sebacic acid, 2,6-naphthalene dicarboxylic acid, 1,4-cyclohexane dicarboxylic acid or the like. As the diols, there may be exemplified ethylene glycol, 1,4-butane diol, diethylene glycol, triethylene glycol, neopentyl glycol, 1,4-cyclohexane dimethanol, polyethylene glycol or the like. As the hydroxycarboxylic acids, there may be exemplified p-hydroxybenzoic acid, 6-hydroxy-2-naphthoic acid or the like.

Typical examples of such polymers may include polyethylene terephthalate, polyethylene-2,6-naphthalate or the like. These polymers may be in the form of homopolymers or copolymers produced by copolymerizing the third component therewith.

First, the white polyester film as defined in the first aspect of the present invention, is explained.

The white polyester film defined in the first aspect of the present invention, contains a white pigment, and has an optical density of 0.1 to 3.0 and a lead content of not more than 50 ppm.

An example of using the white polyester film as a base material, is a prepaid card. As described above, the prepaid card is sometimes traded as value-added product at a premium due to high design value of the picture patterns printed on the surface thereof. Therefore, the color tone of the printing surface of the prepaid card becomes important.

Especially in the case of these prepaid cards, a magnetic recording layer is formed on a surface of each prepaid card opposite to the printing surface thereof. In this case, a magnetic recording material used in the magnetic recording layer usually has black color, brown color or the like. Consequently, when the polyester film shows a low hiding power, the color tone of the printing surface tends to be adversely affected by that of the magnetic recording layer, so that the high design value of the printing surface is considerably damaged.

Thus, the polyester film defined in the first aspect of the present invention is required to have an optical density of 0.1 to 3.0. The optical density thereof is preferably 0.2 to 2.5, more preferably 0.3 to 2.2.

The white polyester film can show an appropriate hiding property by adding various white pigments thereto. As the white pigments, there may be exemplified titanium dioxide, barium sulfate, calcium carbonate or the like. However, any other white pigments may also be used in the present invention as long as white polyester films can be produced by the use thereof. These white pigments may be surface-treated to improve various properties such as whiteness or the like.

The white polyester film according to the present invention is printed to form various picture patterns on the surface thereof, or coated with a magnetic composition to form a magnetic layer thereon especially when the film is used as magnetic cards, thereby obtaining final products.

As described above, in the case where the white polyester film is processed into final products, e.g., magnetic cards, the film on which the magnetic layer and the printed layer have been formed, is cut or stamped into cards, so that unusable film chips are inevitably generated. Further, in the case where the cards produced have any defects in quality or prototypes are produced, it is necessary to subject these products to disposal treatment. At that time, irrespective of whether or not the white film is processed, from the standpoint of environmental protection, it is required to reduce the content of harmful lead components in the white polyester film as a base material of these products.

It has been reported that the concentration of lead in soil is 20 ppm at maximum and about 10 ppm on the average, and the concentration of lead in crust is about 2 ppm or less on the average. Therefore, the concentration of lead in the white polyester film is required to be limited to not more than 10 ppm, preferably not more than 2 ppm, more preferably not more than 1 ppm. When the concentration of lead in the white polyester film is more than 10 ppm, soil around the waste white polyester film buried under the ground, tends to be contaminated up to a serious level by the high lead concentration. From the standpoint of global environmental protection, it is preferred that the concentration of lead in the white polyester film is reduced to not more than the lead concentration in crust, i.e., not more than 2 ppm. When taking into consideration such a possibility that the printed layer and magnetic layer formed on the white polyester film contain any lead components, it is more preferred that the concentration of lead in the white polyester film is further reduced to not more than 1 ppm.

In general, polyester contains such metal elements as derived from catalyst components added during various polyester production processes. As these metal elements, there may be exemplified calcium, phosphorus, manganese, antimony, magnesium, germanium, cobalt, zinc or the like. Usually, no lead compounds are contained in polyester itself.

Accordingly, especially as to the white polyester film, it is necessary to reduce the concentration of lead in the white pigment.

In order to impart a good hiding property to the white polyester film, an appropriate amount of the white pigment is added thereto. At that time, the concentration of lead in the white pigment is restricted to not more than 50 ppm, preferably not more than 10 ppm, more preferably not more than 1 ppm. When the concentration of lead in the white pigment exceeds 50 ppm, it may become difficult to obtain a white polyester film capable of exhibiting a good optical density while maintaining a low lead concentration. Such white pigments having less lead content may include, for example, rutile-type titanium dioxide produced by a chlorine method. On the other hand, anatase-type titanium dioxide produced by a sulfuric acid method may be not preferable as the white pigment of the present invention because of a high lead content thereof.

In the case where titanium dioxide is used as the white pigment, the average particle size of titanium dioxide is 0.1 to 1.0 µm, preferably 0.2 to 0.5 µm. When the average particle size of titanium dioxide is less than 0.1 µm, the light transmittance of the obtained white polyester film is large, so that the white hiding effect thereof tends to be insufficient. On the other hand, when the average particle size of titanium dioxide is more than 1.0 µm, the inherent whiteness of titanium dioxide may not be sufficiently exhibited.

The poor hiding effect requires the increase in concentration of the white pigment added, resulting in increase in lead content of the white polyester film.

Especially in the case where titanium dioxide is used as the white pigment, the amount of titanium dioxide blended is usually 2.0 to 40 % by weight, preferably 5.0 to 20 % by weight based on the weight of polyester. When the amount of titanium dioxide blended is less than 2.0 % by weight, the light transmittance of the obtained white polyester film is large, so that the hiding effect thereof tends to be unsatisfactory. On the other hand, when the amount of titanium dioxide blended is more than 40 % by weight, the lead content in the white polyester film disadvantageously increases, and further there tend to be caused problems such as rupture of films upon film production due to deteriorated mechanical properties of polyester, and the like.

The white pigment may be added at any optional stage of the production process of polyester film.

The white polyester film according to the present invention may further contain, if necessary, inert particles other than the white pigments, unless the inert particles have such average particle size and content that the weather resistance, whiteness and surface smoothness of the obtained polyester film are adversely affected, and the number of coarse particles contained therein is not increased. In addition to the inert particles, so-called precipitated fine particles obtained by reacting catalyst residue with a phosphorus compound in the reaction system, may also be contained in the white polyester film according to the present invention.

For example, in the case where the anatase-type titanium dioxide is used as the white pigment, by adjusting an amount of silicon dioxide in the anatase-type titanium dioxide to not more than 1.0 % by weight calculated as Si, it is possible to enhance the dispersibility of the titanium dioxide in polyester.

Next, the multi-layered (laminated) white polyester film as defined in the second aspect of the present invention, is explained.

The multi-layered white polyester film as defined in the second aspect of the present invention, comprises at least two layers, at least one outer layer containing an anatase-type titanium dioxide in an amount of 2 to 40 % by weight, and at least one other layer containing a white pigment in such an amount that the concentration of lead contained in the white pigment is not more than 50 ppm.

The multi-layered white polyester film as defined in the second aspect of the present invention, has an optical density of preferably 0.1 to 3.0, more preferably 0.2 to 2.5, most preferably 0.3 to 2.2, for the same reasons as described hereinbefore with respect to the white polyester film as defined in the first aspect of the present invention.

The multi-layered white polyester film can show a good hiding property by adding various white pigments thereto. As the white pigments, there may be used the same pigments as those exemplified hereinbefore with respect to the white polyester film as defined in the first aspect of the present invention.

Picture patterns are printed on a printing surface of the multi-layered white polyester film according to the present invention. In order to maintain a high design value of the picture patterns, it is important that the multi-layered white polyester film has a good whiteness. The whiteness of the multi-layered white polyester film, is usually not more than 2.0, preferably not more than 1.0 when represented by the color difference b value.

In order to maintain such a high design value of the picture patterns on the multi-layered white polyester film, it is required to incorporate the white pigment in at least one outer layer. The whiteness of the outer layer on which the picture patterns are printed, is particularly important. Therefore, the selection of the white pigment used in the printed outer layer becomes extremely important.

As the white pigments usable in the multi-layered white polyester film according to the present invention, there may be exemplified titanium dioxide, calcium carbonate, barium sulfate or the like. However, it is necessary that the white pigment used in the outer layer is titanium dioxide. These white pigments may be surface-treated in order to improve various properties such as whiteness or the like.

Titanium dioxide is generally classified into anatase-type and rutile-type according to crystal structure thereof. In the multi-layered white polyester film according to the second aspect, the titanium dioxide used in at least one outer layer thereof is preferably anatase-type titanium dioxide.

In general, it is preferred that the white pigment show a high reflectance over a whole wavelength range of visible light. From the comparison between the anatase-type titanium dioxide (hereinafter referred to merely as anatase) and the rutile-type titanium dioxide (hereinafter referred to merely as rutile), it is recognized that in a visible light range, the rutile having a higher refractive index, shows a slightly higher reflectance than that of the anatase, while in a near-ultraviolet range of 380 to 420 nm, the anatase conversely shows a higher reflectance that of the rutile, namely, the rutile shows a slight light absorption up to 430 nm (violet). This light absorption is a property inherent to the rutile. Therefore, the rutile has a more yellowish color as compared to the anatase. For this reason, the anatase is more preferable in order to obtain a good whiteness and, therefore, maintain a high design value of the picture patterns printed.

In order to exhibit the feature of the anatase at maximum, the concentration of anatase in at least one outer layer is 2 to 40 % by weight, preferably 3 to 30 % by weight, more preferably 5 to 21 % by weight based on the weight of said outer layer. When the concentration of anatase in the outer layer is less than 2 % by weight, the color tone of polyester itself may become relatively strong and, therefore, adversely affect that of the outer layer, so that the inherent color tone of the anatase cannot be exhibited. On the other hand, when the concentration of anatase in the outer layer is more than 40 % by weight, the film tends to be ruptured during the production of the white polyester film, especially upon transverse stretching during biaxially stretching process, or the anatase tends to be fallen off or desorbed from the surface of the film, so that the fallen-off or desorbed anatase acts like abrasive grains, thereby causing the process to be contaminated.

In the multi-layered white polyester film according to the present invention, at least one other layer than the above-mentioned outer layer is constituted by either another outer layer or an intermediate layer. For this reason, it is not necessarily required that the at least one other layer has a high design value. Various white pigments may be added to the at least one other layer as long as the multi-layered white polyester film can maintain its appropriate properties. However, in this case, it is preferred that the content of lead compounds in the white pigment be restricted to such a low level as to cause no environmental pollution upon disposal of waste white polyester films. More specifically, the concentration of lead in the white pigment is not more than 50 ppm, preferably not more than 20 ppm, more preferably not more than 10 ppm. When the concentration of lead in the white pigment is more than 50 ppm, it may be not possible to attain the aimed effect of maintaining a high design value of the picture patterns while restricting the lead content to a low level.

These multi-layered white polyester film may be subsequently processed into final products by processors, e.g., various picture patterns are printed thereon, or especially in the case of magnetic cards, a magnetic layer is formed thereon to produce the final products.

As described above, in the production of final products, e.g., in the case of magnetic cards, the film on which the magnetic layer and the printed layer are formed, is cut or stamped into cards, so that unusable film chips are inevitably generated. Further, in the case where the cards produced have any defects in quality or prototypes are produced, it is necessary to subject these products to disposal treatment. At that time, irrespective of whether or not the white film is processed, from the standpoint of environmental protection, it is required to reduce the content of harmful lead components in the white polyester film as a base material of these products.

The concentration of lead in the multi-layered white polyester film is preferably not more than 10 ppm, more preferably not more than 5 ppm, still more preferably not more than 2 ppm, especially preferably not more than 1 ppm, for the same reason as described above with respect to the white polyester as defined in the first aspect of the present invention.

Polyester generally contains such metal elements as derived from catalyst components added during various polyester production processes. As these metal elements, there may be exemplified calcium, phosphorus, manganese, antimony, magnesium, germanium, cobalt, zinc or the like. Thus, no lead compounds are usually contained in polyester itself.

Accordingly, especially in the case of the white polyester film, it is necessary to reduce the concentration of lead in the white pigment. For example, by using as a white pigment, a rutile produced by a chlorine method, it is possible to reduce the lead content in the film.

In the case where titanium oxide is used as the white pigment, the average particle size and preferred ranges thereof are the same as those of the white polyester film as defined in first aspect of the present invention, for the same reason as described above.

Also, in this case, the amount of titanium oxide blended and preferred ranges thereof are the same as those of the white polyester film defined in first aspect of the present invention, for the same reason as described above.

The white pigment may be added at any optional stage of the polyester film production process.

The multi-layered white polyester film as defined in the second aspect of the present invention may further contain, if necessary, the same inert particles and precipitated fine particles as those used in the white polyester film defined in the first aspect of the present invention.

In the case where the anatase-type titanium dioxide is used as the white pigment, by limiting a silicon dioxide content in the anatase-type titanium dioxide to not more than 1.0 % by weight calculated as Si, it is possible to enhance the dispersibility of titanium dioxide in polyester.

The white polyester film or the multi-layered white polyester film according to the present invention not only can show a high hiding power by incorporating a white pigment therein, but also can be considerably reduced in content of lead as a harmful element, thereby preventing environmental pollution from occurring upon disposal thereof. Accordingly, the present invention is extremely valuable from the industrial viewpoint.

### Examples

The present invention is described in more detail with reference to the following examples, but the present invention is not restricted to those examples and various modifications are possible within the scope of the invention.

Incidentally, various properties were measured and defined as follows, and in Examples and Comparative Examples, "%" represents "% by weight", unless otherwise specified.

### (1) Whiteness of film:

The whiteness of film was expressed by the b value measured by a color difference meter manufactured by Tokyo Denshoku Co., Ltd. The smaller b value indicates a higher whiteness, and the larger b value indicates a higher yellowness of the film. The whiteness was measured with respect to opposite surfaces of the film.

### (2) Concentration of lead:

The concentration of lead contained in the film was measured by a fluorescent X-ray method using an X-ray analyzer "XRF1500" manufactured by Shimazu Seisakusho Co., Ltd. A film specimen was of a circular disc shape having a diameter of 30 mm⌀ and a thickness of 4 mm.

### (3) Optical density:

Using a Macbeth colorimeter "TD-904 Model", the optical density of the film under a G-filter was measured. The larger the optical density, the higher the hiding power of the film.

### (4) Total evaluation:

○: Having a lead content of not more than 10 ppm, showing a high whiteness, and capable of maintaining a design value of the printed layer thereon.
×: Deteriorated in either one of properties.
ⓞ: Having an extremely low lead content and capable of highly maintaining a design value of the printed layer thereon.

### (Production of polyester chips)

100 parts of dimethyl terephthalate, 70 parts of ethylene glycol and 0.07 part of calcium acetate monohydrate were charged into a reactor and heated to distill off methanol, thereby subjecting these components to ester exchange reaction. After the initiation of the ester exchange reaction, the temperature of the reactor was raised to 230°C for 4.5 hours at which the ester exchange reaction was substantially stopped.

Next, 0.04 part of phosphoric acid and 0.035 part of antimony trioxide were added to the reactor and the contents of the reactor were polymerized by an ordinary method. More specifically, the reaction temperature was gradually raised until finally reaching 280°C. Whereas, the pressure within the reactor was gradually decreased until reaching finally 0.05 mmHg. The reaction was terminated after 4 hours. The obtained reaction product was formed into chips by an ordinary method, thereby obtaining polyester chips (A). The obtained polyester chips (A) had a solution viscosity IV of 0.66.

### (Production of rutile master batch chips)

60 parts of the obtained polyester chips (A) and 40 parts of rutile-type titanium dioxide produced by an ordinary method and having an average particle size of 0.3 µm and a lead content of 1 ppm ("CR-50" produced by Ishihara Sangyo Co., Ltd.), were melted and mixed together in a twin-screw extruder by an ordinary method, thereby obtaining master batch chips (B).

### (Production of anatase master batch chips)

Similarly, 60 parts of the polyester chips (A) and 40 parts of anatase-type titanium dioxide produced by an ordinary method and having an average particle size of 0.3 µm and a lead content of 100 ppm, were melted and mixed together in a twin-screw extruder by an ordinary method, thereby obtaining master batch chips (C).

### Example 1:

The master batch chips (B) were mixed with the polyester chips (A) such that the content of titanium dioxide in the mixture was 13 %. The mixture was heated at 180°C for 2 hours and melt-extruded into a film using a T-die. The extruded film was quenched and solidified, and then successively stretched in longitudinal and transverse directions at stretch ratios of 3.1 times at 83°C and 3.6 times at 125°C, respectively. Then, the thus-stretched film was heat-treated at 230°C, thereby obtaining a biaxially stretched white polyester film having a thickness of 188 µm.

The properties of the obtained white polyester film are shown in Table 1. The obtained white polyester film had a low lead content and a high hiding property, so that it was possible to maintain a high design value of the printed surface thereof.

### Example 2:

The same procedure as defined in Example 1 was conducted except that the content of titanium dioxide in the film was 7 %, thereby obtaining a biaxially stretched white polyester film.

The properties of the obtained white polyester film are shown in Table 1. The obtained white polyester film showed extremely satisfactory properties similarly to those of Example 1.

### Comparative Example 1:

The same procedure as defined in Example 1 was conducted except that the master batch chips (C) were blended with the polyester chips (A) such that the content of titanium dioxide in the mixture was 13 %, thereby obtaining a biaxially stretched white polyester film.

The properties of the obtained white polyester film are shown in Table 1. The lead concentration in the obtained white polyester film was 13 ppm which was larger than that in soil. Therefore, the obtained white polyester film had such a poor quality which would cause any environmental pollution when buried under the ground.

**Table 1**

| Properties of white polyester film | Example 1 | Example 2 | Comparative Example 1 |
|---|---|---|---|
| Film thickness (µm) | 188 | 188 | 188 |
| Optical density | 2.0 | 1.3 | 1.3 |
| Lead (Pb) concentration in film (ppm) | 0.13 | 0.07 | 13.0 |
| Total evaluation | ⓞ | ⓞ | × |

### Example 3:

67 % of the polyester chips (A) were blended with 33 % of the master batch chips (B), and the obtained mixture was dried at 180°C for 2 hours. Separately, 67 % of the polyester chips (A) were blended with 33 % of the master batch chips (C), and the obtained mixture was dried at 180°C for 2 hours.

Using a multi-manifold die of AB type for extruding two layers comprising two different kinds of materials, the dried mixture of the polyester chips (A) and the master batch chips (B) and the dried mixture of the polyester chips (A) and the master batch chips (C), were separately melt-extruded through respective single screw extruders into a multi-layered film comprising A and B layers. The extruded multi-layered film was shaped on a rotary cooling drum maintained at 30°C, thereby obtaining an amorphous sheet. In this case, the film was brought into close contact with the surface of the rotary cooling drum by an electrostatic pinning method. The obtained amorphous sheet was successively stretched in the longitudinal direction at a stretch ratio of 3.1 times at 83°C and then in the transverse direction at a stretch ratio 3.6 times at 125°C. The obtained biaxially stretched film was heat-treated at a heat-setting temperature of 230°C for 3.5 seconds, thereby obtaining a color pigment-containing multi-layered polyester film (A).

The thickness of the obtained multi-layered polyester film (A) was 188 µm, and the thicknesses of the A and B layers thereof were 173 µm and 15 µm, respectively.

The properties of the obtained multi-layered white polyester film are shown in Table 2. The obtained multi-layered white polyester film had a low lead content, and the B layer thereof showed a high whiteness, so that it was expected that a high design value of picture patterns printed thereon can be maintained.

### Comparative Example 2:

The same procedure as defined in Example 3 was conducted except that the amounts of the master batch chips (C) and the polyester chips (A) blended in the B layer, were changed to 1 % and 99 %, respectively, thereby obtaining a multi-layered white polyester film.

The properties of the obtained multi-layered white polyester film are shown in Table 2. Although the lead concentration in the obtained white polyester film was low, both the surfaces of the obtained film were deteriorated in whiteness, so that it was not expected that a design value of picture patterns printed on the surfaces thereof can be maintained.

### Comparative Example 3:

The same procedure as defined in Example 3 was conducted except that the master batch chips (B) used in the A layer was changed to the master batch chips (C), thereby obtaining a multi-layered white polyester film.

The properties of the obtained multi-layered white polyester film are shown in Table 2. Although the obtained white polyester film showed a good whiteness, the lead concentration thereof was disadvantageously high.

### Example 4:

The same procedure as defined in Example 3 was conducted except that a multi-manifold die of BAB type for extruding three layers composed of two different kinds of materials was used instead of the AB type such that both the outer layers were constituted by B layers each having a thickness of 12 µm and the whole film thickness was 188 µm, thereby obtaining a multi-layered white polyester film.

The properties of the obtained multi-layered white polyester film are shown in Table 2. The obtained multi-layered white polyester film showed a good whiteness and a low lead content.

**Table 2**

| Properties of multi-layered polyester film | Example 3 | Comparative Example 2 | Comparative Example 3 | Example 4 |
|---|---|---|---|---|
| Whole film thickness (µm) | 188 | 188 | 188 | 188 |
| Thickness of A layer (µm) | 173 | 173 | 173 | 164 |
| Kind of titanium dioxide | Rutile | Rutile | Anatase | Rutile |
| Lead (Pb) concentration (ppm) | 1 | 1 | 100 | 1 |
| Concentration of titanium (wt. %) | 13 | 13 | 13 | 13 |
| Thickness of B layer (µm) | 15 | 15 | 15 | 12x2 |
| Kind of titanium dioxide | Anatase | Anatase | Anatase | Anatase |
| Concentration of titanium (wt. %) | 13 | 1 | 13 | 13 |
| Whiteness (b value) | -0.1 | 4.0 | -0.2 | -0.1 |
| Hiding power | 2.1 | 1.8 | 2.0 | 2.0 |
| Concentration of lead in film (ppm) | 1.2 | 0.2 | 13 | 1.8 |
| Total evaluation | ○ | × | × | ○ |

## Claims

1. A white polyester film which contains a white pigment, has an optical density of 0.1 to 3.0 and contains lead in an amount of not more than 50 ppm.

2. A white polyester film according to claim 1, wherein said white pigment contains lead in an amount of not more than 10 ppm.

3. A white polyester film according to claim 1, wherein the white pigment is anatase-type, rutile-type titanium dioxide or mixture thereof having an average particle size of 0.1 to 1.0 µm, in an amount of 2 to 40 % by weight.

4. A white polyester film having a multi-layered structure and comprising at least one outer layer containing a white pigment in an amount of 2 to 40 % by weight based on the weight of said outer layer, and at least one other layer containing a white pigment which contains lead in an amount of not more than 50 ppm.

5. A white polyester film according to claim 4, wherein, the white pigment contained in said outer layer is anatase-type titanium dioxide.

6. A white polyester film according to claim 4, wherein the concentration of lead in said polyester film is not more than 10 ppm.

7. A white-polyester film according to claim 4, wherein said white pigment contained in said other layer is rutile-type titanium dioxide containing lead in an amount of not more than 20 ppm.

## Patentansprüche

1. Eine weiße Polyesterfolie, welche ein Weißpigment enthält, eine optische Dichte von 0,1 bis 3,0 aufweist und Blei in einer Menge von nicht mehr als 50 ppm enthält.

2. Eine weiße Polyesterfolie nach Anspruch 1, worin das genannte Weißpigment Blei in einer Menge von nicht mehr als 10 ppm enthält.

3. Eine weiße Polyesterfolie nach Anspruch 1, worin das Weißpigment Anatas-förmiges Rutil-förmiges Titandioxid oder eine Mischung davon ist, welche eine durchschnittliche Teilchengröße von 0,1 bis 1,0 µm aufweist, in einer Menge von 2 bis 40 Gewichtsprozent.

4. Eine weiße Polyesterfolie, welche eine vielschichtige Struktur aufweist und welche mindestens eine äußere Schicht umfasst, die ein Weißpigment in einer Menge von 2 bis 40 Gewichtsprozent, basierend auf dem Gewicht der genannten äußeren Schicht, beinhaltet, und mindestens eine andere Schicht, die ein Weißpigment enthält, welches Blei in einer Menge von nicht mehr als 50 ppm enthält.

5. Eine weiße Polyesterfolie nach Anspruch 4, worin das Weißpigment, das in der genannten äußeren Schicht enthalten ist, Anatas-förmiges Titandioxid ist.

6. Eine weiße Polyesterfolie nach Anspruch 4, worin die Konzentration an Blei in der genannten Polyesterfolie nicht mehr als 10 ppm ist.

7. Eine weiße Polyesterfolie nach Anspruch 4, worin das genannte Weißpigment, das in der genannten äußeren Schicht enthalten ist, Rutil-förmiges Titandioxid ist, welches Blei in einer Menge von nicht mehr als 20 ppm enthält.

## Revendications

1. Film de polyester blanc qui contient un pigment blanc, a une densité optique de 0,1 à 3,0 et contient du plomb en quantité ne dépassant pas 50 ppm.

2. Film de polyester blanc selon la revendication 1, dans lequel ledit pigment blanc contient du plomb en quantité ne dépassant pas 10 ppm.

3. Film de polyester blanc selon la revendication 1, dans lequel le pigment blanc est du dioxyde de titane de type anatase, de type rutile ou un mélange de ceux-ci ayant une taille particulaire moyenne de 0,1 à 1, 0 µm en quantité de 2 à 40 % en poids.

4. Film de polyester blanc ayant une structure multicouche et comprenant au moins une couche externe contenant un pigment blanc en quantité de 2 à 40 % en poids sur la base du poids de ladite couche externe, et au moins une autre couche contenant un pigment blanc qui contient du plomb en quantité ne dépassant pas 50 ppm.

5. Film de polyester blanc selon la revendication 4, dans lequel le pigment blanc contenu dans ladite couche externe est du dioxyde de titane de type anatase.

6. Film de polyester blanc selon la revendication 4, dans lequel la concentration de plomb dans ledit film de polyester ne dépasse pas 10 ppm.

7. Film de polyester blanc selon la revendication 4, dans lequel ledit pigment blanc contenu dans ladite autre couche est du dioxyde de titane de type rutile contenant du plomb en quantité ne dépassant pas 20 ppm.
